(19) Europäisches Patentamt
European Patent Office
Office européen des brevets

(11) EP 3 939 806 A1

(12) **EUROPEAN PATENT APPLICATION**

(43) Date of publication:
**19.01.2022 Bulletin 2022/03**

(21) Application number: **21183380.1**

(22) Date of filing: **02.07.2021**

(51) International Patent Classification (IPC):
***B60C 1/00*** (2006.01) ***C08L 9/06*** (2006.01)
***C08K 5/548*** (2006.01) ***C08K 3/36*** (2006.01)
***C08L 9/00*** (2006.01) ***C08L 91/00*** (2006.01)

(52) Cooperative Patent Classification (CPC):
(C-Sets available)
**B60C 1/00; B60C 1/0016; C08L 9/06** (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **17.07.2020 JP 2020123065**

(71) Applicant: **Sumitomo Rubber Industries, Ltd.**
**Kobe-shi, Hyogo 651-0072 (JP)**

(72) Inventor: **WATANABE, KENYA**
**Kobe-shi, Hyogo, 651-0072 (JP)**

(74) Representative: **Winter, Brandl - Partnerschaft mbB**
**Alois-Steinecker-Straße 22**
**85354 Freising (DE)**

# (54) TIRE RUBBER COMPOSITION AND TIRE

(57) Provided are tire rubber compositions with improved overall performance in terms of wet grip performance at high temperatures and fuel economy. Included are tire rubber compositions containing one or more fillers including silica, and one or more silane coupling agents, the silane coupling agents including one or more organosilicon compounds containing an alkoxysilyl group and a sulfur atom with six or more carbon atoms linking the alkoxysilyl group and the sulfur atom, the rubber compositions having a glass transition temperature of -18°C or higher.

EP 3 939 806 A1

(52) Cooperative Patent Classification (CPC): (Cont.)

C-Sets
**C08L 9/06, C08L 25/16, C08L 9/00, C08L 91/00, C08L 91/06, C08K 3/04, C08K 3/36, C08K 5/548, C08K 5/09, C08K 3/22, C08K 5/18, C08K 5/31, C08K 5/47;**
**C08L 9/06, C08L 25/16, C08L 9/00, C08L 91/00, C08L 91/06, C08K 3/04, C08K 3/36, C08K 5/548, C08K 5/09, C08K 3/22, C08K 5/18, C08K 5/31, C08K 5/47;**
**C08L 9/06, C08L 25/16, C08L 91/00, C08L 9/00, C08L 91/06, C08K 3/04, C08K 3/36, C08K 5/548, C08K 5/09, C08K 3/22, C08K 5/18, C08K 5/31, C08K 5/47**

**Description**

TECHNICAL FIELD

The present invention relates to tire rubber compositions and tires.

BACKGROUND ART

It has been known to reduce rolling resistance by reducing the silica content or by introducing a modifying group into a polymer to reduce the molecular mobility. However, in the context of the increasing outdoor air temperature, simply reducing rolling resistance may result in poor heat build-up in the rubber and therefore reduced wet grip performance at high temperatures. Hence, it is desirable to improve fuel economy while ensuring wet grip performance at high temperatures.

SUMMARY OF INVENTION

TECHNICAL PROBLEM

The present invention aims to solve the above problem and provide tire rubber compositions with improved overall performance in terms of wet grip performance at high temperatures and fuel economy.

SOLUTION TO PROBLEM

The present invention relates to tire rubber compositions, containing: one or more fillers including silica; and one or more silane coupling agents, the silane coupling agents including one or more organosilicon compounds containing an alkoxysilyl group and a sulfur atom with six or more carbon atoms linking the alkoxysilyl group and the sulfur atom, the rubber compositions having a glass transition temperature of -18°C or higher.

Preferably, the rubber compositions have a glass transition temperature of -16°C or higher.

Preferably, the rubber compositions contain one or more rubber components having a total styrene content of 30% by mass or lower.

Preferably, the rubber compositions contain, based on 100% by mass of rubber components therein, 60 to 95% by mass of one or more styrene-butadiene rubbers and 5 to 40% by mass of one or more polybutadiene rubbers.

Preferably, the rubber compositions contain, per 100 parts by mass of one or more rubber components therein, 80 parts by mass or more of the silica.

Preferably, the rubber compositions contain a silica having a nitrogen adsorption specific surface area of 160 $m^2/g$ or more.

Preferably, an amount of oils is 20 parts by mass or less per 100 parts by mass of one or more rubber components in the rubber compositions.

Preferably, the rubber compositions contain, per 100 parts by mass of one or more rubber components therein, 30 parts by mass or more of one or more resin components.

Preferably, an amount of oils and an amount of resin components each per 100 parts by mass of one or more rubber components in the rubber compositions satisfy the following relationship:

Amount of resin components/Amount of oils $\geq$ 2.0.

The present invention also relates to tires, including a tire component including any of the rubber compositions.

Preferably, the tire component is a tread.

ADVANTAGEOUS EFFECTS OF INVENTION

The tire rubber compositions according to the present invention contain one or more fillers including silica, and one or more silane coupling agents. The silane coupling agents include one or more organosilicon compounds containing an alkoxysilyl group and a sulfur atom with six or more carbon atoms linking the alkoxysilyl group and the sulfur atom, and the rubber compositions have a glass transition temperature of -18°C or higher. Thus, the rubber compositions have improved overall performance in terms of wet grip performance at high temperatures and fuel economy.

DESCRIPTION OF EMBODIMENTS

The tire rubber compositions of the present invention contain one or more fillers including silica, and one or more silane coupling agents. The silane coupling agents include one or more organosilicon compounds containing an

alkoxysilyl group and a sulfur atom with six or more carbon atoms linking the alkoxysilyl group and the sulfur atom, and the rubber compositions have a glass transition temperature (Tg) of -18°C or higher. Such rubber compositions have improved overall performance in terms of wet grip performance at high temperatures and fuel economy.

The reason for the above-mentioned advantageous effect is not exactly clear, but is believed to be due to the following mechanism.

Possible techniques for improving fuel economy include reducing rolling resistance by reducing the silica content or by introducing a modifying group into the polymer to reduce the molecular mobility, as described earlier. However, in the context of the increasing outdoor air temperature, simply reducing rolling resistance may result in poor heat build-up in the rubber and therefore reduced wet grip performance at high temperatures. To address this problem, one or more organosilicon compounds containing an alkoxysilyl group and a sulfur atom with six or more carbon atoms linking the alkoxysilyl group and the sulfur atom as silane coupling agents, namely long chain silane coupling agents, may be used to efficiently hydrophobize silica to enhance its dispersion, thereby reducing heat build-up at around room temperature which contributes to rolling resistance. Further, by adjusting the glass transition temperature (Tg) of the rubber composition to -18°C or higher, it is possible to improve heat build-up at temperatures slightly lower than room temperature, without deteriorating rolling resistance, thereby simultaneously ensuring wet grip performance at high temperatures (for example, about 40°C). Thus, it is believed that the overall performance in terms of wet grip performance at high temperatures and fuel economy can be significantly improved by the above-mentioned mechanism of action.

Accordingly, the rubber compositions solve the problem (purpose) of improving overall performance in terms of wet grip performance at high temperatures and fuel economy by having a structure that satisfies "Tg $\geq$ -18°C" and contains one or more fillers including silica, and one or more silane coupling agents including one or more organosilicon compounds containing an alkoxysilyl group and a sulfur atom with six or more carbon atoms linking the alkoxysilyl group and the sulfur atom. In other words, the parameter of "Tg $\geq$ -18°C" does not define the problem (purpose), and the problem herein is to improve overall performance in terms of wet grip performance at high temperatures and fuel economy. In order to provide a solution to this problem, a structure satisfying the above parameter has been devised.

The rubber compositions (vulcanized rubber compositions) have a glass transition temperature (Tg) of - 18°C or higher. From the standpoint of overall performance in terms of wet grip performance at high temperatures and fuel economy, the Tg is preferably -17°C or higher, more preferably -16°C or higher, still more preferably -14°C or higher, particularly preferably -13°C or higher. The upper limit of the Tg is not limited, but it is preferably 0°C or lower, more preferably -2°C or lower, still more preferably -4°C or lower, particularly preferably -5°C or lower.

Herein, the Tg refers to the tan $\delta$ peak temperature which refers to the temperature corresponding to the maximum tan $\delta$ in the tan $\delta$ versus temperature curve determined by a viscoelastic test. Specifically, the Tg, i.e., tan $\delta$ peak temperature, can be measured as described later in EXAMPLES.

The Tg (tan $\delta$ peak temperature) of the rubber compositions (vulcanized rubber compositions) can be controlled by the types and amounts of the chemicals (in particular, rubber components, resin components, fillers, liquid plasticizers, etc.) incorporated in the rubber compositions. For example, the Tg tends to be increased by using a styrene-butadiene rubber, especially having high styrene and vinyl contents, or incorporating a resin or plasticizer component having a high softening temperature, or by other techniques. Moreover, the Tg can be adjusted to -18°C or higher by varying the amounts of materials such as styrene-butadiene rubbers, resin components, silica, and plasticizers.

(Rubber component)

Examples of rubber components that may be used in the rubber compositions include diene rubbers. Examples of the diene rubbers include isoprene-based rubbers, polybutadiene rubbers (BR), styrene-butadiene rubbers (SBR), styrene-isoprene-butadiene rubbers (SIBR), ethylene-propylene-diene rubbers (EPDM), chloroprene rubbers (CR), and acrylonitrile butadiene rubbers (NBR). Butyl-based rubbers and fluororubbers may also be used. These may be used alone or in combinations of two or more. From the standpoint of overall performance in terms of wet grip performance at high temperatures and fuel economy, SBR, BR, and isoprene-based rubbers are preferred among these, with SBR and/or BR being more preferred.

The diene rubbers may be either unmodified or modified diene rubbers.

The modified diene rubbers may be any diene rubber having a functional group interactive with a filler such as silica. Examples include a chain end-modified diene rubber obtained by modifying at least one chain end of a diene rubber with a compound (modifier) having the functional group (i.e., a chain end-modified diene rubber terminated with the functional group); a backbone-modified diene rubber having the functional group in the backbone; a backbone- and chain end-modified diene rubber having the functional group in both the backbone and chain end (e.g., a backbone- and chain end-modified diene rubber in which the backbone has the functional group and at least one chain end is modified with the modifier); and a chain end-modified diene rubber that has been modified (coupled) with a polyfunctional compound having two or more epoxy groups in the molecule to introduce a hydroxy or epoxy group.

Examples of the functional group include amino, amide, silyl, alkoxysilyl, isocyanate, imino, imidazole, urea,

ether, carbonyl, oxycarbonyl, mercapto, sulfide, disulfide, sulfonyl, sulfinyl, thiocarbonyl, ammonium, imide, hydrazo, azo, diazo, carboxyl, nitrile, pyridyl, alkoxy, hydroxy, oxy, and epoxy groups. These functional groups may be substituted. Preferred among these are amino groups (preferably amino groups whose hydrogen atom is replaced with a C1-C6 alkyl group), alkoxy groups (preferably C1-C6 alkoxy groups), and alkoxysilyl groups (preferably C1-C6 alkoxysilyl groups).

Any SBR may be used, and examples include emulsion-polymerized styrene-butadiene rubbers (E-SBR) and solution-polymerized styrene-butadiene rubbers (S-SBR). These may be used alone or in combinations of two or more.

The styrene content of the SBR is preferably 5.0% by mass or higher, more preferably 8.0% by mass or higher, still more preferably 10.0% by mass or higher, but is preferably 35.0% by mass or lower, more preferably 30.0% by mass or lower, still more preferably 28.0% by mass or lower, particularly preferably 27.0% by mass or lower. When the styrene content is within the range indicated above, the overall performance in terms of wet grip performance at high temperatures and fuel economy tends to be improved.

Herein, the styrene content can be measured by $^{1}$H-NMR analysis.

The vinyl bond content of the SBR is preferably 30% by mass or higher, more preferably 40% by mass or higher, still more preferably 45% by mass or higher, particularly preferably 50% by mass or higher, but is preferably 80% by mass or lower, more preferably 70% by mass or lower, still more preferably 65% by mass or lower. When the vinyl bond content is within the range indicated above, the overall performance in terms of wet grip performance at high temperatures and fuel economy tends to be improved.

Herein, the vinyl bond content (1,2-butadiene unit content) can be measured by infrared absorption spectrometry.

The SBR may be either unmodified or modified SBR. Examples of the modified SBR include those into which functional groups as listed for the modified diene rubbers are introduced. Hydrogenated styrene-butadiene copolymers (hydrogenated SBR) may also be used as the SBR.

SBR products manufactured or sold by Sumitomo Chemical Co., Ltd., JSR Corporation, Asahi Kasei Corporation, Zeon Corporation, Versalis, Trinseo, etc. may be used as the SBR.

The amount of the SBR based on 100% by mass of the rubber components is preferably 5% by mass or more, more preferably 50% by mass or more, still more preferably 60% by mass or more, particularly preferably 70% by mass or more. The upper limit is preferably 95% by mass or less, more preferably 90% by mass or less, still more preferably 85% by mass or less. When the amount is within the range indicated above, the overall performance in terms of wet grip performance at high temperatures and fuel economy tends to be improved.

Any BR may be used, and examples include high-cis BR having high cis content, syndiotactic polybutadiene crystal-containing BR, and BR synthesized using rare earth catalysts (rare earth-catalyzed BR). These may be used alone or in combinations of two or more. In particular, high-cis BR having a cis content of 90% by mass or higher is preferred as the BR. The cis content is more preferably 95% by mass or higher. The cis content can be measured by infrared absorption spectrometry.

The BR may be either unmodified or modified BR. Examples of the modified BR include those into which functional groups as listed for the modified diene rubbers are introduced. Hydrogenated polybutadiene polymers (hydrogenated BR) may also be used as the BR.

The BR may be commercially available from Ube Industries, Ltd., JSR Corporation, Asahi Kasei Corporation, Zeon Corporation, etc.

The amount of the BR based on 100% by mass of the rubber components is preferably 5% by mass or more, more preferably 10% by mass or more, still more preferably 15% by mass or more. The upper limit is preferably 60% by mass or less, more preferably 40% by mass or less, still more preferably 35% by mass or less, particularly preferably 30% by mass or less. When the amount is within the range indicated above, the overall performance in terms of wet grip performance at high temperatures and fuel economy tends to be improved.

Examples of the isoprene-based rubbers include natural rubbers (NR), polyisoprene rubbers (IR), refined NR, modified NR, and modified IR. Examples of the NR include those commonly used in the rubber industry such as SIR20, RSS#3, and TSR20. Any IR may be used, and examples include those commonly used in the rubber industry such as IR2200. Examples of the refined NR include deproteinized natural rubbers (DPNR) and highly purified natural rubbers (UPNR). Examples of the modified NR include epoxidized natural rubbers (ENR), hydrogenated natural rubbers (HNR), and grafted natural rubbers. Examples of the modified IR include epoxidized polyisoprene rubbers, hydrogenated polyisoprene rubbers, and grafted polyisoprene rubbers. These may be used alone or in combinations of two or more.

The amount of the isoprene-based rubbers, if present, based on 100% by mass of the rubber components in the rubber compositions is preferably 5% by mass or more, more preferably 8% by mass or more, still more preferably 10% by mass or more. The upper limit is preferably 30% by mass or less, more preferably 20% by mass or less, still more preferably 15% by mass or less. When the amount is within the range indicated above, the overall performance in terms of wet grip performance at high temperatures and fuel economy tends to be improved.

The total styrene content of the rubber components (the total amount of the styrene units in the total rubber

components) in the rubber compositions is preferably 30.0% by mass or lower. In this case, the overall performance in terms of wet grip performance at high temperatures and fuel economy can be significantly improved.

The reason for the above-mentioned advantageous effect is not exactly clear, but is believed to be due to the following mechanism.

When the rubber components have a low total styrene content, for example, the aggregation of SBR molecules and the steric hindrance against dispersion of silica are reduced. Consequently, the silica hydrophobized by the long-chain silane coupling agents is more dispersed in the system, thus providing the effect of reducing heat build-up at around room temperature which contributes to rolling resistance. Also, the Tg of -18°C or higher provides the effect of improving wet grip performance at high temperatures without deteriorating rolling resistance. Thus, it is believed that the overall performance in terms of wet grip performance at high temperatures and fuel economy can be significantly improved.

From the standpoint of overall performance in terms of wet grip performance at high temperatures and fuel economy, the total styrene content is more preferably 25.0% by mass or lower, still more preferably 23.0% by mass or lower, particularly preferably, 21.0% by mass or lower. The lower limit is preferably 5.0% by mass or higher, more preferably 10.0% by mass or higher, still more preferably 13.0% by mass or higher, particularly preferably 15.0% by mass or higher.

Here, the total styrene content of the rubber components is the value of $\Sigma$ [(the amount of each styrene-containing rubber) $\times$ (the styrene content of the each styrene-containing rubber)/100]. For example, rubber components consisting of 40% by mass of SBR(A) (styrene content 27.5% by mass), 40% by mass of SBR(B) (styrene content 26.0% by mass), and 20% by mass of BR have a total styrene content of 21.4% by mass (= 40 $\times$ 27.5/100 + 40 $\times$ 26.0/100).

From the standpoint of overall performance in terms of wet grip performance at high temperatures and fuel economy, the total vinyl content of the rubber components (the total amount of the vinyl units in the total rubber components) in the rubber compositions is preferably 30.0% by mass or higher. The total vinyl content is more preferably 40.0% by mass or higher, still more preferably 43.0% by mass or higher, particularly preferably 45.0% by mass or higher. The upper limit is preferably 70.0% by mass or lower, more preferably 60.0% by mass or lower, still more preferably 55.0% by mass or lower, particularly preferably 52.0% by mass or lower.

Here, the total vinyl content of the rubber components is the value of $\Sigma$ [(the amount of each vinyl-containing rubber) $\times$ (the vinyl content of the each vinyl-containing rubber)/100]. For example, rubber components consisting of 80% by mass of SBR (vinyl content 59.0% by mass) and 20% by mass of BR (vinyl content 1.0% by mass) have a total vinyl content of 47.4% by mass (= 80 $\times$ 59.0/100 + 20 $\times$ 1.0/100).

From the standpoint of overall performance in terms of wet grip performance at high temperatures and fuel economy, the total styrene content and total vinyl content of the rubber components in the rubber compositions preferably satisfy the following relationship (A):

(A) $0.20 \leq \alpha 1/\alpha 2 \leq 1.00$

wherein $\alpha 1$: total styrene content of rubber components (% by mass);

$\alpha$ 2: total vinyl content of rubber components (% by mass).

The ratio of $\alpha 1/\alpha 2$ in relationship (A) is more preferably 0.30 or higher, still more preferably 0.40 or higher, particularly preferably 0.42 or higher, but is more preferably 0.80 or lower, still more preferably 0.60 or lower, particularly preferably 0.55 or lower. When the ratio is within the range indicated above, the overall performance in terms of wet grip performance at high temperatures and fuel economy tends to be improved.

(Silica)

The rubber compositions contain one or more types of silica as filler. Examples of the silica include dry silica (anhydrous silica) and wet silica (hydrous silica). Wet silica is preferred among these because it contains a large number of silanol groups. Commercial products available from Degussa, Rhodia, Tosoh Silica Corporation, Solvay Japan, Tokuyama Corporation, etc. may be used. These may be used alone or in combinations of two or more.

The nitrogen adsorption specific surface area ($N_2SA$) of the silica is preferably 50 $m^2/g$ or more, more preferably 150 $m^2/g$ or more, still more preferably 160 $m^2/g$ or more, particularly preferably 180 $m^2/g$ or more, and may be 210 $m^2/g$ or more. The upper limit of the $N_2SA$ of the silica is not limited, but it is preferably 600 $m^2/g$ or less, more preferably 350 $m^2/g$ or less, still more preferably 260 $m^2/g$ or less, particularly preferably 200 $m^2/g$ or less. When the $N_2SA$ is within the range indicated above, the overall performance in terms of wet grip performance at high temperatures and fuel economy tends to be improved.

The $N_2SA$ of the silica is measured by a BET method in accordance with ASTM D3037-93.

The amount of the silica per 100 parts by mass of the rubber components in the rubber compositions is preferably 5 parts by mass or more, more preferably 50 parts by mass or more, still more preferably 70 parts by mass or more, particularly preferably 80 parts by mass or more. The upper limit of the amount is preferably 250 parts by mass or less, more preferably 200 parts by mass or less, still more preferably 170 parts by mass or less, particularly preferably 150

parts by mass or less. When the amount is within the range indicated above, the overall performance in terms of wet grip performance at high temperatures and fuel economy tends to be improved.

(Silane coupling agent)

The one or more silane coupling agents used in the rubber compositions include one or more organosilicon compounds containing an alkoxysilyl group and a sulfur atom with six or more carbon atoms linking the alkoxysilyl group and the sulfur atom. Such organosilicon compounds may be used alone or in combinations of two or more. Preferred among the organosilicon compounds are organosilicon compounds represented by the following average composition formula (I):

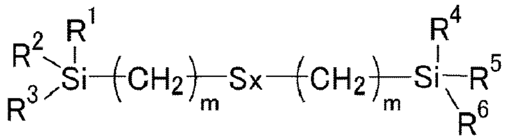

(I)

wherein x represents an average number of sulfur atoms which is 3.5 or larger; m represents an integer of 6 or larger; and $R^1$ to $R^6$ are the same as or different from one another and each represent a C1-C6 alkyl or alkoxy group, provided that at least one of $R^1$ to $R^3$ and at least one of $R^4$ to $R^6$ are the alkoxy groups, and $R^1$ to $R^6$ may form a ring in which the alkyl or alkoxy groups are joined together.

The symbol x represents the average number of sulfur atoms of the organosilicon compounds. The number x is preferably at least 3.5 but not larger than 12. Here, the average number of sulfur atoms and the number of silicon atoms are determined by measuring the amounts of sulfur and silicon in a composition by X-ray fluorescence spectroscopy followed by conversion using the molecular weights of these elements.

The symbol m represents an integer of 6 or larger, preferably at least 6 but not larger than 14.

The number of carbon atoms of the alkyl group (for $R^1$ to $R^6$) is preferably at least one but not more than five. The alkyl group may be linear, branched, or cyclic. Specific examples include a methyl group, an ethyl group, a n-propyl group, an isopropyl group, a n-butyl group, an iso-butyl group, a sec-butyl group, and a tert-butyl group.

The number of carbon atoms of the alkoxy group (for $R^1$ to $R^6$) is preferably at least one but not more than five. The hydrocarbon group in the alkoxy group may be linear, branched, or cyclic. Specific examples include a methoxy group, an ethoxy group, a n-propoxy group, an isopropoxy group, and a n-butoxy group.

At least one of $R^1$ to $R^3$ and at least one of $R^4$ to $R^6$ are C1-C6 alkoxy groups. Preferably, at least two of $R^1$ to $R^3$ and at least two of $R^4$ to $R^6$ are C1-C6 alkoxy groups.

Moreover, $R^1$ to $R^6$ may form a ring in which the C1-C6 alkyl or alkoxy groups are joined together. For example, i) when an ethoxy group as $R^1$ and a methyl group as $R^2$ are joined together to form a ring, or ii) when an ethyl group as $R^1$ and a methyl group as $R^2$ are joined together to form a ring, the ring may be such that $R^1$ and $R^2$ together form the divalent group: $-O-C_2H_4-CH_2-$ or $-C_2H_4-CH_2-$, respectively, which is bound to the Si.

The organosilicon compounds may be prepared as described in, for example, JP 2018-65954 A, which is incorporated herein by reference. Specifically, the organosilicon compounds may be prepared by reacting a halogen-containing organosilicon compound represented by formula (I-1) described in JP 2018-65954 A, and anhydrous sodium sulfide represented by $Na_2S$, and optionally sulfur. In the reaction, it is optional to add sulfur to adjust the sulfide chain, and this may be determined from the amounts of the compound of average composition formula (I-1) and anhydrous sodium sulfide, and optionally sulfur in order to obtain the target compounds of average composition formula (I). For example, when it is desired to obtain compounds of average composition formula (I) in which x is 3.5, 1.0 mol of anhydrous sodium sulfide, 2.5 mol of sulfur, and 2.0 mol of the compound of formula (I-1) may be reacted.

Moreover, when one or more organosilicon compounds containing an alkoxysilyl group and a sulfur atom with six or more carbon atoms linking the alkoxysilyl group and the sulfur atom as silane coupling agents, namely long chain silane coupling agents, are used, the alkoxy groups of the compounds may react with the hydroxy groups on the surface of silica to hydrophobize the surface of silica. Further, the hydrophobization effect of the compounds is larger than that of conventional silane coupling agents due to their long carbon chain. Thus, dispersion of silica can be significantly improved, and therefore the heat build-up at around room temperature, which contributes to rolling resistance, can be reduced. Further, by adjusting the glass transition temperature (Tg) of the rubber composition to -18°C or higher, it is possible to improve heat build-up at temperatures slightly lower than room temperature, without deteriorating rolling resistance, thereby simultaneously ensuring wet grip performance at high temperatures (for example, about 40°C). Thus, the overall performance in terms of wet grip performance at high temperatures and fuel economy can be improved by the use of the long chain silane coupling agents.

The amount of the organosilicon compounds per 100 parts by mass of the silica in the rubber compositions is

preferably 0.1 parts by mass or more, more preferably 3 parts by mass or more, still more preferably 5 parts by mass or more, particularly preferably 7 parts by mass or more. The upper limit of the amount is preferably 50 parts by mass or less, more preferably 20 parts by mass or less, still more preferably 15 parts by mass or less, particularly preferably 10 parts by mass or less. When the amount is within the range indicated above, the overall performance in terms of wet grip performance at high temperatures and fuel economy tends to be improved. Moreover, the amount of the organosilicon compounds of average composition formula (I) is desirably within the same range.

The rubber compositions may contain additional silane coupling agents in addition to the organosilicon compounds containing an alkoxysilyl group and a sulfur atom with six or more carbon atoms linking the alkoxysilyl group and the sulfur atom.

Non-limiting examples of the additional silane coupling agents include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyltetrasulfide, 2-triethoxysilylethyl-N,N-dimethylthiocarbamoyltetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z both available from Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. Commercial products available from Degussa, Momentive, Shin-Etsu Silicone, Tokyo Chemical Industry Co., Ltd., AZmax. Co., Dow Corning Toray Co., Ltd., etc. may be used. These may be used alone or in combinations of two or more.

The amount of the silane coupling agents (the combined amount of the organosilicon compounds and the additional silane coupling agents) per 100 parts by mass of the silica in the rubber compositions is preferably 0.1 parts by mass or more, more preferably 3 parts by mass or more, still more preferably 5 parts by mass or more, particularly preferably 7 parts by mass or more. The upper limit of the amount is preferably 50 parts by mass or less, more preferably 20 parts by mass or less, still more preferably 15 parts by mass or less, particularly preferably 10 parts by mass or less. When the amount is within the range indicated above, the overall performance in terms of wet grip performance at high temperatures and fuel economy tends to be improved.

(Other fillers)

Any additional filler may be used in addition to the silica, including materials known in the rubber field. Examples include inorganic fillers such as carbon black, calcium carbonate, talc, alumina, clay, aluminum hydroxide, aluminum oxide, and mica. Carbon black or aluminum hydroxide is preferred among these.

The amount of the fillers (the total amount of the fillers) per 100 parts by mass of the rubber components in the rubber compositions is preferably 5 parts by mass or more, more preferably 50 parts by mass or more, still more preferably 80 parts by mass or more, particularly preferably 90 parts by mass or more. The upper limit of the amount is preferably 250 parts by mass or less, more preferably 200 parts by mass or less, still more preferably 170 parts by mass or less, particularly preferably 150 parts by mass or less. When the amount is within the range indicated above, the overall performance in terms of wet grip performance at high temperatures and fuel economy tends to be improved.

From the standpoint of overall performance in terms of wet grip performance at high temperatures and fuel economy, the percentage of the silica based on 100% by mass of the fillers in the rubber compositions is preferably 50% by mass or more, more preferably 80% by mass or more, still more preferably 85% by mass or more. The upper limit is not limited, but it is preferably 98% by mass or less, more preferably 95% by mass or less.

Any carbon black may be used in the rubber compositions, and examples include N134, N110, N220, N234, N219, N339, N330, N326, N351, N550, and N762. Commercial products available from Asahi Carbon Co., Ltd., Cabot Japan K.K., Tokai Carbon Co., Ltd., Mitsubishi Chemical Corporation, Lion Corporation, NSCC Carbon Co., Ltd., Columbia Carbon, etc. may be used. These may be used alone or in combinations of two or more.

The nitrogen adsorption specific surface area ($N_2SA$) of the carbon black is preferably 50 $m^2/g$ or more, more preferably 70 $m^2/g$ or more, still more preferably 90 $m^2/g$ or more, but is preferably 200 $m^2/g$ or less, more preferably 150 $m^2/g$ or less, still more preferably 130 $m^2/g$ or less. When the $N_2SA$ is within the range indicated above, the overall performance in terms of wet grip performance at high temperatures and fuel economy tends to be improved.

The nitrogen adsorption specific surface area of the carbon black is determined in accordance with JIS K6217-2:2001.

The amount of the carbon black per 100 parts by mass of the rubber components in the rubber compositions

is preferably 1 part by mass or more, more preferably 3 parts by mass or more, still more preferably 5 parts by mass or more. The upper limit of the amount is preferably 50 parts by mass or less, more preferably 30 parts by mass or less, still more preferably 20 parts by mass or less. When the amount is within the range indicated above, the overall performance in terms of wet grip performance at high temperatures and fuel economy tends to be improved.

Any aluminum hydroxide may be used, including those commonly used in the tire industry. These may be used alone or in combinations of two or more.

The average primary particle size of the aluminum hydroxide is preferably 0.6 μm or more, more preferably 0.7 μm or more. The average primary particle size of the aluminum hydroxide is also preferably 10 μm or less, more preferably 5 μm or less, still more preferably 1.3 μm or less, particularly preferably 1.2 μm or less. When the average primary particle size is within the range indicated above, the advantageous effect tends to be better achieved.

Herein, the average primary particle size of the aluminum hydroxide refers to the number average particle size measured using a transmission electron microscope.

The amount of the aluminum hydroxide per 100 parts by mass of the rubber components in the rubber compositions is preferably 5 parts by mass or more, more preferably 10 parts by mass or more. The upper limit of the amount is preferably 60 parts by mass or less, more preferably 50 parts by mass or less, still more preferably 40 parts by mass or less. When the amount is within the range indicated above, the overall performance in terms of wet grip performance at high temperatures and fuel economy tends to be improved.

(Plasticizer)

The rubber compositions may contain one or more plasticizers. The term "plasticizers" refers to materials which impart plasticity to rubber components. Examples include liquid plasticizers (plasticizers that are liquid at room temperature (25°C)) and resin components (resins that are liquid at room temperature (25°C) and resins that are solid at room temperature (25°C)). Particularly when resin components are incorporated, they can increase heat build-up at high temperatures and also can adsorb to the surface of silica to improve its dispersion during mixing. Thus, the overall performance in terms of wet grip performance at high temperatures and fuel economy (rolling resistance) can be significantly improved.

The amount of the plasticizers (the total amount of the plasticizers) per 100 parts by mass of the rubber components in the rubber compositions is preferably 5 parts by mass or more, more preferably 20 parts by mass or more, still more preferably 30 parts by mass or more, particularly preferably 40 parts by mass or more. The upper limit of the amount is preferably 200 parts by mass or less, more preferably 150 parts by mass or less, still more preferably 100 parts by mass or less, particularly preferably 75 parts by mass or less. When the amount is within the range indicated above, the overall performance in terms of wet grip performance at high temperatures and fuel economy tends to be improved.

Any liquid plasticizer (plasticizer that is liquid at room temperature (25°C)) may be used in the rubber compositions. Examples include oils and liquid polymers. Examples of the liquid polymers include liquid rubbers and liquid farnesene polymers. These may be used alone or in combinations of two or more.

The amount of the liquid plasticizers (the combined amount of the oils, liquid rubbers, and liquid farnesene polymers) per 100 parts by mass of the rubber components in the rubber compositions is preferably 5 parts by mass or more, more preferably 10 parts by mass or more, still more preferably 15 parts by mass or more. The upper limit of the amount is preferably 100 parts by mass or less, more preferably 70 parts by mass or less, still more preferably 50 parts by mass or less, particularly preferably 35 parts by mass or less. When the amount is within the range indicated above, the overall performance in terms of wet grip performance at high temperatures and fuel economy tends to be improved.

Examples of the oils include process oils and plant oils, and mixtures thereof. Examples of the process oils include paraffinic process oils, aromatic process oils, and naphthenic process oils. Examples of the plant oils include castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. Commercial products available from Idemitsu Kosan Co., Ltd., Sankyo Yuka Kogyo K.K., ENEOS Corporation, Olisoy, H&R, Hokoku Corporation, Showa Shell Sekiyu K.K., Fuji Kosan Co., Ltd., The Nisshin Oillio Group., Ltd., etc. may be used. Process oils, such as paraffinic process oils, aromatic process oils, and naphthenic process oils, or plant oils are preferred among these.

Process oils contain aromatic hydrocarbons ($C_A$), paraffinic hydrocarbons (Cp), and naphthenic hydrocarbons ($C_N$) in the molecular structure thereof. Process oils are roughly classified as aromatic oils, paraffinic oils, or naphthenic oils, depending on the $C_A$ content (mass%), Cp content (mass%), and $C_N$ content (mass%). The rubber compositions desirably contain one or more oils having an aromatic hydrocarbon content of 20% by mass or higher.

The aromatic hydrocarbon content of the oils is preferably 25% by mass or higher, more preferably 30% by mass or higher, but is preferably 70% by mass or lower, more preferably 65% by mass or lower, still more preferably 60% by mass or lower. When the aromatic hydrocarbon content is within the range indicated above, the overall performance in terms of wet grip performance at high temperatures and fuel economy tends to be improved.

Herein, the aromatic hydrocarbon content of the oils can be measured by a ring analysis (n-d-M method in accordance with ASTM D3238).

The amount of the oils per 100 parts by mass of the rubber components in the rubber compositions is preferably 3 parts by mass or more, more preferably 5 parts by mass or more, still more preferably 7 parts by mass or more. The upper limit of the amount is preferably 70 parts by mass or less, more preferably 30 parts by mass or less, still more preferably 20 parts by mass or less, particularly preferably 15 parts by mass or less. When the amount is within the range indicated above, the overall performance in terms of wet grip performance at high temperatures and fuel economy tends to be improved. It should be noted that the amount of the oils includes the amount of the oils contained in the oil extended rubbers, if used.

Examples of the liquid rubbers include liquid diene rubbers which can be extracted with acetone. Specific examples include liquid diene rubbers which are liquid at 25°C, such as liquid styrene-butadiene copolymers (liquid SBR), liquid polybutadiene polymers (liquid BR), liquid polyisoprene polymers (liquid IR), liquid styrene-isoprene copolymers (liquid SIR), liquid styrene-butadiene-styrene block copolymers (liquid SBS block polymers), and liquid styrene-isoprene-styrene block copolymers (liquid SIS block polymers). The chain end or backbone of these polymers may be modified with a polar group. Hydrogenated products of these polymers may also be used.

The amount of the liquid rubbers per 100 parts by mass of the rubber components in the rubber compositions is preferably 5 parts by mass or more, more preferably 10 parts by mass or more, still more preferably 15 parts by mass or more. The upper limit of the amount is preferably 100 parts by mass or less, more preferably 70 parts by mass or less, still more preferably 50 parts by mass or less, particularly preferably 35 parts by mass or less. When the amount is within the range indicated above, the overall performance in terms of wet grip performance at high temperatures and fuel economy tends to be improved. Moreover, the amount of the liquid diene rubbers is desirably within the same range.

The liquid farnesene polymers refer to polymers produced by polymerization of farnesene and containing a structural unit derived from farnesene. Farnesene exists in isomeric forms, including α-farnesene ((3E,7E)-3,7,11-trimethyl-1,3,6,10-dodecatetraene) and β-farnesene (7,11-dimethyl-3-methylene-1,6,10-dodecatriene). Preferred is (E)-β-farnesene having the following structure:

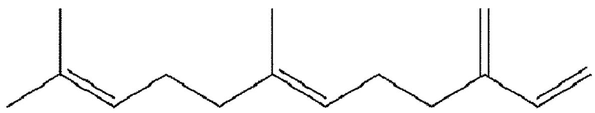

The liquid farnesene polymers may be homopolymers of farnesene (farnesene homopolymers) or copolymers of farnesene and vinyl monomers (farnesene-vinyl monomer copolymers).

Examples of the vinyl monomers include aromatic vinyl compounds such as styrene, 2-methylstyrene, 3-methylstyrene, 4-methylstyrene, α-methylstyrene, 2,4-dimethylstyrene, 2,4-diisopropylstyrene, 4-tert-butylstyrene, 5-t-butyl-2-methylstyrene, vinylethylbenzene, divinylbenzene, trivinylbenzene, divinylnaphthalene, tert-butoxystyrene, vinylbenzyldimethylamine, (4-vinylbenzyl)dimethylaminoethyl ether, N,N-dimethylaminoethylstyrene, N,N-dimethylaminomethylstyrene, 2-ethylstyrene, 3-ethylstyrene, 4-ethylstyrene, 2-t-butylstyrene, 3-t-butylstyrene, 4-t-butylstyrene, vinylxylene, vinylnaphthalene, vinyltoluene, vinylpyridine, diphenylethylene, and tertiary amino group-containing diphenylethylene; and conjugated diene compounds such as butadiene and isoprene. These may be used alone or in combinations of two or more. Butadiene is preferred among these. In other words, copolymers of farnesene and butadiene (farnesene-butadiene copolymers) are preferred among the farnesene-vinyl monomer copolymers.

In the farnesene-vinyl monomer copolymers, the copolymerization ratio of the farnesene to the vinyl monomers (farnesene/vinyl monomers) is preferably 40/60 to 90/10 by mass.

Liquid farnesene polymers having a weight average molecular weight (Mw) of 3,000 to 300,000 are suitable. The Mw of the liquid farnesene polymers is preferably 8,000 or more, more preferably 10,000 or more, but is preferably 100,000 or less, more preferably 60,000 or less, still more preferably 50,000 or less.

The amount of the liquid farnesene polymers per 100 parts by mass of the rubber components in the rubber compositions is preferably 5 parts by mass or more, more preferably 10 parts by mass or more, still more preferably 15 parts by mass or more. The upper limit of the amount is preferably 100 parts by mass or less, more preferably 70 parts by mass or less, still more preferably 50 parts by mass or less, particularly preferably 35 parts by mass or less. When the amount is within the range indicated above, the overall performance in terms of wet grip performance at high temperatures and fuel economy tends to be improved.

The amount of the liquid polymers (the combined amount of the liquid rubbers and the liquid farnesene polymers) per 100 parts by mass of the rubber components in the rubber compositions is preferably 5 parts by mass or more, more preferably 10 parts by mass or more, still more preferably 15 parts by mass or more. The upper limit of the amount is preferably 100 parts by mass or less, more preferably 70 parts by mass or less, still more preferably 50 parts by mass

or less, particularly preferably 35 parts by mass or less. When the amount is within the range indicated above, the overall performance in terms of wet grip performance at high temperatures and fuel economy tends to be improved.

The amount of the resin components (the combined amount of the resins that are liquid at room temperature (25°C) and the resins that are solid at room temperature (25°C)) per 100 parts by mass of the rubber components in the rubber compositions is preferably 5 parts by mass or more, more preferably 20 parts by mass or more, still more preferably 30 parts by mass or more, particularly preferably 40 parts by mass or more. The upper limit of the amount is preferably 120 parts by mass or less, more preferably 100 parts by mass or less, still more preferably 80 parts by mass or less, particularly preferably 65 parts by mass or less. When the amount is within the range indicated above, the overall performance in terms of wet grip performance at high temperatures and fuel economy tends to be improved.

Examples of the resins that are liquid at room temperature (25°C) as the resin components include liquid resins. The liquid resins may be those which have a softening point equal to or lower than room temperature and are liquid at room temperature. Examples of the liquid resins include terpene resins (including terpene phenol resins and aromatic modified terpene resins), rosin resins, styrene resins, C5 resins, C9 resins, C5/C9 resins, dicyclopentadiene (DCPD) resins, coumarone-indene resins (including resins based on coumarone or indene alone), phenol resins, olefin resins, polyurethane resins, and acrylic resins. Hydrogenated products of the foregoing may also be used.

The amount of the liquid resins per 100 parts by mass of the rubber components in the rubber compositions is preferably 5 parts by mass or more, more preferably 10 parts by mass or more, still more preferably 15 parts by mass or more. The upper limit of the amount is preferably 100 parts by mass or less, more preferably 70 parts by mass or less, still more preferably 50 parts by mass or less, particularly preferably 35 parts by mass or less. When the amount is within the range indicated above, the overall performance in terms of wet grip performance at high temperatures and fuel economy tends to be improved.

Examples of the resins that are solid at room temperature (25°C) (hereinafter, also referred to as "solid resins") as the resin components include those which are solid at room temperature (25°C), such as aromatic vinyl polymers, coumarone-indene resins, coumarone resins, indene resins, phenol resins, rosin resins, petroleum resins, terpene resins, and acrylic resins. The resins may also be hydrogenated. These may be used alone or in combinations of two or more. From the standpoint of overall performance in terms of wet grip performance at high temperatures and fuel economy, aromatic vinyl polymers, terpene resins, petroleum resins, and hydrogenated products of the foregoing are preferred among these.

The amount of the solid resins per 100 parts by mass of the rubber components in the rubber compositions is preferably 5 parts by mass or more, more preferably 15 parts by mass or more, still more preferably 25 parts by mass or more, particularly preferably 30 parts by mass or more. The upper limit of the amount is preferably 100 parts by mass or less, more preferably 80 parts by mass or less, still more preferably 65 parts by mass or less, particularly preferably 55 parts by mass or less. When the amount is within the range indicated above, the overall performance in terms of wet grip performance at high temperatures and fuel economy tends to be improved. Moreover, the amount of the aromatic vinyl polymers, the amount of the terpene resins, and the amount of the petroleum resins are each desirably within the same range.

The softening point of the solid resins is preferably 60°C or higher, more preferably 70°C or higher, still more preferably 80°C or higher. The upper limit is preferably 160°C or lower, more preferably 130°C or lower, still more preferably 115°C or lower. When the softening point is within the range indicated above, the overall performance in terms of wet grip performance at high temperatures and fuel economy tends to be improved.

The softening point of the resin components is determined in accordance with JIS K 6220-1:2001 using a ring and ball softening point measuring apparatus and defined as the temperature at which the ball drops down.

The aromatic vinyl polymers refer to polymers containing an aromatic vinyl monomer as a structural unit. Examples include resins produced by polymerization of $\alpha$-methylstyrene and/or styrene. Specific examples include styrene homopolymers (styrene resins), $\alpha$-methylstyrene homopolymers (a-methylstyrene resins), copolymers of $\alpha$-methylstyrene and styrene, and copolymers of styrene and other monomers.

The coumarone-indene resins refers to resins containing coumarone and indene as main monomer components forming the skeleton (backbone) of the resins. Examples of monomer components which may be contained in the skeleton in addition to coumarone and indene include styrene, $\alpha$-methylstyrene, methylindene, and vinyltoluene. The amount of the coumarone-indene resins per 100 parts by mass of the rubber components is preferably 1 to 200 parts by mass.

The coumarone resins refer to resins containing coumarone as a main monomer component forming the skeleton (backbone) of the resins.

The indene resins refer to resins containing indene as a main monomer component forming the skeleton (backbone) of the resins.

Examples of the phenol resins include known polymers produced by reaction of phenol with aldehydes such as formaldehyde, acetaldehyde, or furfural in the presence of acid or alkali catalysts. Preferred among these are those produced by reaction using acid catalysts (e.g., novolactype phenol resins).

Examples of the rosin resins include rosin-based resins, such as typically natural rosins, polymerized rosins,

modified rosins, and esterified compounds thereof, and hydrogenated products thereof. The amount of the rosin resins per 100 parts by mass of the rubber components is preferably 1 to 200 parts by mass.

Examples of the petroleum resins include C5 resins, C9 resins, C5/C9 resins, dicyclopentadiene (DCPD) resins, and hydrogenated products of the foregoing resins. DCPD resins or hydrogenated DCPD resins are preferred among these.

The terpene resins refer to polymers containing terpene as a structural unit. Examples include polyterpene resins produced by polymerization of terpene compounds, and aromatic modified terpene resins produced by polymerization of terpene compounds and aromatic compounds. Hydrogenated products of the foregoing resins may also be used.

The polyterpene resins refer to resins produced by polymerization of terpene compounds. The terpene compounds refer to hydrocarbons having a composition represented by $(C_5H_8)_n$ or oxygen-containing derivatives thereof, each of which has a terpene backbone and is classified as a monoterpene ($C_{10}H_{16}$), sesquiterpene ($C_{15}H_{24}$), or diterpene ($C_{20}H_{32}$), for example. Examples of the terpene compounds include α-pinene, β-pinene, dipentene, limonene, myrcene, alloocimene, ocimene, α-phellandrene, α-terpinene, γ-terpinene, terpinolene, 1,8-cineole, 1,4-cineole, α-terpineol, β-terpineol, and γ-terpineol.

Examples of the polyterpene resins include resins made from the above-mentioned terpene compounds, such as pinene resins, limonene resins, dipentene resins, and pinene-limonene resins. Pinene resins are preferred among these. Pinene resins, which usually contain two isomers, i.e. α-pinene and β-pinene, are classified as β-pinene resins mainly containing β-pinene and α-pinene resins mainly containing α-pinene, depending on the proportions of the components in the resins.

Examples of the aromatic modified terpene resins include terpene phenol resins made from the above-mentioned terpene compounds and phenolic compounds, and terpene styrene resins made from the above-mentioned terpene compounds and styrene compounds. Terpene phenol styrene resins made from the terpene compounds, phenolic compounds, and styrene compounds may also be used. Examples of the phenolic compounds include phenol, bisphenol A, cresol, and xylenol. Examples of the styrene compounds include styrene and α-methylstyrene.

The acrylic resins refer to polymers containing an acrylic monomer as a structural unit. Examples include styrene acrylic resins such as styrene acrylic resins containing carboxyl groups which are produced by copolymerization of aromatic vinyl monomer components and acrylic monomer components. Solvent-free, carboxyl group-containing styrene acrylic resins are suitable among these.

The solvent-free, carboxyl group-containing styrene acrylic resins may be (meth)acrylic resins (polymers) synthesized by high temperature continuous polymerization (high temperature continuous bulk polymerization as described in, for example, US Patent No. 4,414,370, JP S59-6207 A, JP H5-58005 B, JP H1-313522 A, US Patent No. 5,010,166, and annual research report TREND 2000 issued by Toagosei Co., Ltd., vol. 3, pp. 42-45, all of which are incorporated herein by reference) using no or minimal amounts of auxiliary raw materials such as polymerization initiators, chain transfer agents, and organic solvents. Herein, the term "(meth)acrylic" means methacrylic and acrylic.

Examples of the acrylic monomer components of the acrylic resins include (meth)acrylic acid and (meth)acrylic acid derivatives such as (meth)acrylic acid esters (e.g., alkyl esters, aryl esters, and aralkyl esters such as 2-ethylhexyl acrylate), (meth)acrylamide, and (meth)acrylamide derivatives. The term "(meth)acrylic acid" is a general term for acrylic acid and methacrylic acid.

Examples of the aromatic vinyl monomer components of the acrylic resins include aromatic vinyls such as styrene, α-methylstyrene, vinyltoluene, vinylnaphthalene, divinylbenzene, trivinylbenzene, and divinylnaphthalene.

In addition to the (meth)acrylic acid or (meth)acrylic acid derivatives, and aromatic vinyls, other monomer components may also be used as monomer components of the acrylic resins.

Preferably, the amount of the oils (the amount (parts by mass) of the oils per 100 parts by mass of the rubber components) and the amount of the resin components (the amount (parts by mass) of the resin components per 100 parts by mass of the rubber components) in the rubber compositions satisfy the following relationship: Amount of resin components/Amount of oils ≥ 1.0.

The ratio of "Amount of resin components/Amount of oils" is preferably 2.0 or higher, more preferably 3.0 or higher, still more preferably 3.5 or higher, particularly preferably 4.0 or higher. The upper limit is not limited, but it is preferably 12.0 or lower, more preferably 10.0 or lower, still more preferably 8.0 or lower, particularly preferably 6.0 or lower. When the ratio is within the range indicated above, the overall performance in terms of wet grip performance at high temperatures and fuel economy tends to be improved.

The plasticizers may be commercially available from Maruzen Petrochemical Co., Ltd., Sumitomo Bakelite Co., Ltd., Yasuhara Chemical Co., Ltd., Tosoh Corporation, Rutgers Chemicals (Novares), BASF, Arizona Chemical, Nitto Chemical Co., Ltd., Nippon Shokubai Co., Ltd., ENEOS Corporation, Arakawa Chemical Industries, Ltd., Taoka Chemical Co., Ltd., etc.

(Other materials)

From the standpoint of properties such as crack resistance and ozone resistance, the rubber compositions preferably contain one or more antioxidants.

Any antioxidant may be used, and examples include naphthylamine antioxidants such as phenyl-α-naphthylamine; diphenylamine antioxidants such as octylated diphenylamine and 4,4'-bis(α,α'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as 2,2,4-trimethyl-1,2-dihydroquinoline polymer; monophenolic antioxidants such as 2,6-di-t-butyl-4-methylphenol and styrenated phenol; and bis-, tris-, or polyphenolic antioxidants such as tetrakis[methylene-3-(3',5'-di-t-butyl-4'-hydroxyphenyl)propionate]methane. Preferred among these are p-phenylenediamine or quinoline antioxidants, with N-(1,3-dimethylbutyl)-N'-phenyl-p-phenylenediamine or 2,2,4-trimethyl-1,2-dihydroquinoline polymer being more preferred. Commercial products available from Seiko Chemical Co., Ltd., Sumitomo Chemical Co., Ltd., Ouchi Shinko Chemical Industrial Co., Ltd., Flexsys, etc. may be used.

The amount of the antioxidants per 100 parts by mass of the rubber components in the rubber compositions is preferably 0.2 parts by mass or more, more preferably 0.5 parts by mass or more, but is preferably 7.0 parts by mass or less, more preferably 4.0 parts by mass or less.

The rubber compositions preferably contain one or more types of stearic acid. The amount of the stearic acid per 100 parts by mass of the rubber components in the rubber compositions is preferably 0.5 to 10 parts by mass, more preferably 0.5 to 5 parts by mass.

The stearic acid may be conventional ones, e.g., available from NOF Corporation, Kao Corporation, FUJIFILM Wako Pure Chemical Corporation, or Chiba Fatty Acid Co., Ltd.

The rubber compositions preferably contain one or more types of zinc oxide. The amount of the zinc oxide per 100 parts by mass of the rubber components in the rubber compositions is preferably 0.5 to 10 parts by mass, more preferably 1 to 5 parts by mass.

The zinc oxide may be conventional ones, e.g., available from Mitsui Mining & Smelting Co., Ltd., Toho Zinc Co., Ltd., HakusuiTech Co., Ltd., Seido Chemical Industry Co., Ltd., or Sakai Chemical Industry Co., Ltd.

The rubber compositions may contain one or more waxes. The amount of the waxes per 100 parts by mass of the rubber components in the rubber compositions is preferably 0.5 to 10 parts by mass, more preferably 1 to 5 parts by mass.

Any wax may be used, and examples include petroleum waxes, natural waxes, and synthetic waxes produced by purifying or chemically treating a plurality of waxes. These waxes may be used alone or in combinations of two or more.

Examples of the petroleum waxes include paraffin waxes and microcrystalline waxes. The natural waxes may be any wax derived from non-petroleum resources, and examples include plant waxes such as candelilla wax, carnauba wax, Japan wax, rice wax, and jojoba wax; animal waxes such as beeswax, lanolin, and spermaceti; mineral waxes such as ozokerite, ceresin, and petrolatum; and purified products of the foregoing. Commercial products available from Ouchi Shinko Chemical Industrial Co., Ltd., Nippon Seiro Co., Ltd., Seiko Chemical Co., Ltd., etc. may be used.

The rubber compositions preferably contain one or more types of sulfur in order to moderately crosslink the polymer chains and provide good properties.

The amount of the sulfur per 100 parts by mass of the rubber components in the rubber compositions is preferably 0.1 parts by mass or more, more preferably 0.3 parts by mass or more, still more preferably 0.5 parts by mass or more, but is preferably 4.0 parts by mass or less, more preferably 3.0 parts by mass or less, still more preferably 2.0 parts by mass or less.

Examples of the sulfur include those commonly used in the rubber industry, such as powdered sulfur, precipitated sulfur, colloidal sulfur, insoluble sulfur, highly dispersible sulfur, and soluble sulfur. Commercial products available from Tsurumi Chemical Industry Co., Ltd., Karuizawa Sulfur Co., Ltd., Shikoku Chemicals Corporation, Flexsys, Nippon Kanryu Industry Co., Ltd., Hosoi Chemical Industry Co., Ltd., etc. may be used. These may be used alone or in combinations of two or more.

The rubber compositions preferably contain one or more vulcanization accelerators.

The amount of the vulcanization accelerators in the rubber compositions is not limited and may be arbitrarily selected depending on the desired cure rate or crosslink density. The amount of the vulcanization accelerators per 100 parts by mass of the rubber components is preferably 0.5 parts by mass or more, more preferably 1.0 part by mass or more, still more preferably 1.5 parts by mass of more. The upper limit is preferably 8.0 parts by mass or less, more preferably 6.0 parts by mass or less, still more preferably 5.0 parts by mass or less.

Any type of vulcanization accelerator may be used, including usual ones. Examples of the vulcanization accelerators include thiazole vulcanization accelerators such as 2-mercaptobenzothiazole, di-2-benzothiazolyl disulfide, and N-cyclohexyl-2-benzothiazylsulfenamide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazole sulfenamide, N-t-butyl-2-benzothiazolylsulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. These may be used alone or in combinations of two or more. Sulfenamide, guanidine, or benzothiazole vulcanization accelerators are preferred among these.

In addition to the above-mentioned components, the rubber compositions may appropriately contain compounding agents commonly used in the tire industry such as release agents and other materials.

The rubber compositions may be prepared by known methods, such as by kneading the components using a rubber kneading machine such as an open roll mill or a Banbury mixer, and vulcanizing the kneaded mixture.

The kneading conditions are as follows. In a base kneading step of kneading additives other than vulcanizing agents and vulcanization accelerators, the kneading temperature is usually 50 to 200°C, preferably 80 to 190°C, and the kneading time is usually 30 seconds to 30 minutes, preferably one minute to 30 minutes. In a final kneading step of kneading vulcanizing agents and vulcanization accelerators, the kneading temperature is usually 100°C or lower, preferably from room temperature to 80°C. Then, the composition obtained after kneading vulcanizing agents and vulcanization accelerators is usually vulcanized by press vulcanization, for example. The vulcanization temperature is usually 120 to 200°C, preferably 140 to 180°C.

The rubber compositions may be suitably used in components of pneumatic tires, such as treads (cap treads), sidewalls, base treads, bead apexes, clinch apexes, innerliners, undertreads, rubbers for breaker topping, and rubbers for ply topping, especially in treads (cap treads).

Tires may be produced from the above-described rubber compositions by usual methods. Specifically, an unvulcanized rubber composition containing the above-mentioned components may be extruded into the shape of a tread or other tire components and then assembled with other tire components in a tire building machine in a usual manner to build an unvulcanized tire, which may then be heated and pressurized in a vulcanizer to produce a tire.

Examples of such tires include pneumatic tires and airless tires. Pneumatic tires are preferred among these. The tires may be used as tires for passenger vehicles, large passenger vehicles, large SUVs, heavy duty vehicles such as trucks and buses, light trucks, or motorcycles, racing tires (high performance tires), or other tires. The tires are especially suitable for passenger vehicles, large passenger vehicles, or large SUVs.

## EXAMPLES

The present invention will be specifically described with reference to, but not limited to, examples.

The chemicals used in the examples and comparative examples are listed below.

SBR 1: HPR850 (styrene content 27.5% by mass, vinyl bond content 59.0% by mass) available from JSR Corporation
SBR 2: Europrene SOL R C2525 (styrene content 25% by mass, vinyl bond content 19% by mass) available from Versalis
SBR 3: Tufden 3830 (styrene content 33% by mass, vinyl bond content 23% by mass, oil content 37.5 parts by mass per 100 parts by mass of rubber solids) available from Asahi Kasei Corporation
SBR 4: SLR 6430 (styrene content 40% by mass, vinyl bond content 12% by mass) available from Trinseo
BR: Ubepol BR150B (cis content 98% by mass, vinyl bond content 1% by mass) available from Ube Industries, Ltd.
Carbon black: Seast N220 ($N_2SA$: 114 $m^2/g$) available from Mitsubishi Chemical Corporation
Silica 1: ULTRASIL VN3 ($N_2SA$: 175 $m^2/g$) available from Evonik Degussa
Silica 2: ULTRASIL 9100GR ($N_2SA$: 235 $m^2/g$) available from Evonik Degussa
Organosilicon compound 1: silane coupling agent synthesized in Production Example 1 described below
Organosilicon compound 2: Si266 (bis(3-triethoxysilylpropyl)disulfide) available from Evonik Degussa
Solid resin 1: SYLVARES SA85 (a copolymer of $\alpha$-methylstyrene and styrene, Tg 43°C, softening point 85°C) available from Arizona Chemical
Solid resin 2: YS resin PX1150 (polyterpene ($\beta$-pinene resin), softening point 115°C) available from Yasuhara Chemical Co., Ltd.
Solid resin 3: PR120 (hydrogenated DCPD resin, softening point 120°C) available from ExxonMobil
Oil: A/O mix (oil, aromatic hydrocarbon content 29% by mass) available from Sankyo Yuka Kogyo K.K.
Stearic acid: KIRI available from NOF Corporation
Zinc oxide: Zinc oxide #2 available from Mitsui Mining & Smelting Co., Ltd.
Antioxidant: NOCRAC 6C (N-(1,3-dimethylbutyl)-N'-phenyl-p-phenylenediamine (6PPD)) available from Ouchi Shinko Chemical Industrial Co., Ltd.
Wax: Ozoace wax available from Nippon Seiro Co., Ltd.
Sulfur: powdered sulfur available from Tsurumi Chemical Industry Co., Ltd.
Vulcanization accelerator NS: NOCCELER NS (N-tert-butyl-2-benzothiazylsulfenamide (TBBS)) available from Ouchi Shinko Chemical Industrial Co., Ltd.

Vulcanization accelerator DPG: NOCCELER D (diphenylguanidine) available from Ouchi Shinko Chemical Industrial Co., Ltd.

(Production Example 1: Synthesis of organosilicon compound 1)

A 2 L separable flask equipped with a stirrer, a reflux condenser, a dropping funnel, and a thermometer was charged with 78.0 g (1.0 mol) of anhydrous sodium sulfide, 80.3 g (2.5 mol) of sulfur, and 480 g of ethanol, followed by heating to 80°C. To the resulting mixture was dropwise added 566 g (2.0 mol) of 6-chlorohexyltriethoxysilane, followed by heating with stirring at 80°C for 10 hours. The reaction solution was filtered under pressure through a filter plate to obtain a filtrate from which the salts formed through the reaction were removed. The filtrate was heated to 100°C, and the ethanol was evaporated under a reduced pressure of 10 mmHg or lower to obtain an organosilicon compound 1 (silane coupling agent) as a reaction product. The organosilicon compound 1 had a sulfur content of 18.5% by mass and an average number x of sulfur atoms of 3.5 per molecule of the organosilicon compound 1, with m = 6 (a compound of average composition formula (I)).

<Examples and Comparative Examples>

According to each of the formulation recipes shown in the tables, the polymers and compounding chemicals were added and kneaded in a 1.7 L Banbury mixer at 150°C for three minutes to give a kneaded mixture. To the kneaded mixture were added the sulfur and vulcanization accelerators, and they were kneaded using an open roll mill at 100°C for two minutes to give an unvulcanized rubber composition. The unvulcanized rubber compositions prepared as above were each formed into a cap tread shape and assembled with other tire components, followed by vulcanization at 170°C for 15 minutes to prepare a test tire (tire size: 195/65R15).

The test tires prepared as above were evaluated as described below. The evaluation results are shown in the tables. It should be noted that Comparative Examples 1-2 and 2-2 are used as standards of comparison in Tables 1 and 2, respectively.

<Grass transition temperature (Tg)>

Viscoelastic measurement samples with a size of 20 mm in length × 4 mm in width × 1 mm in thickness were collected from the tread portion of each test tire in such a manner that the longer side of the samples was in the tire circumferential direction. The samples were measured using a GABO Eplexor over a temperature range of -70 to 70°C at a frequency of 10 Hz, an initial strain of 10%, an amplitude of ± 0.5%, and a rate of temperature increase of 2°C/min to determine a tan δ versus temperature curve. The temperature at which the tan δ reached the maximum was determined as the grass transition temperature (Tg).

<Rolling resistance (fuel economy)>

The test tires were mounted on each wheel of a front-engine, front-wheel-drive car of 2,000 cc displacement made in Japan and inflated with air to a normal inner pressure (250 kPa). Then, the car was driven on a test course under dry road surface conditions at 80 km/h for 15 minutes and then the accelerator pedal was released. The distance the car travelled from the release of the accelerator until the car stopped was determined as a measure of rolling resistance relative to Comparative Example 1-2 or 2-2 as a standard comparative example. A higher value indicates a longer distance from the time of release of the accelerator until the car stopped, and thus a smaller rolling resistance and better fuel economy.

$$\text{Rolling resistance (fuel economy index)} = (\text{Measurement result of test tire})/(\text{Measurement result of standard comparative example}) \times 100$$

<Wet grip performance at high temperatures (vehicle test)>

The test tires were mounted on each wheel of a car of 2,000 cc displacement made in Japan. The braking distance of the car on a wet road at an air temperature of 35°C was measured and expressed as a wet grip performance index using the following equation. A higher index indicates better wet grip performance at high temperatures.

Wet grip performance index (35°C) = (Braking distance of standard comparative example)/(Braking distance of each formulation example) × 100

[Table 1]

| | | Example | | | | | | | | | | Comparative Example | |
|---|---|---|---|---|---|---|---|---|---|---|---|---|---|
| | | 1-1 | 1-2 | 1-3 | 1-4 | 1-5 | 1-6 | 1-7 | 1-8 | 1-9 | 1-10 | 1-1 | 1-2 |
| Amount (parts by mass) | SBR 1 | 80 | | | | | 20 | | | | | 80 | |
| | SBR 2 | | 80 | 80 | 80 | 80 | 60 | 80 | 80 | 80 | | | |
| | SBR 3 | | | | | | | | | | | | 110 (Oil 30) |
| | SBR 4 | | | | | | | | | | 110 (Oil 30) | | |
| | BR | 20 | 20 | 20 | 20 | 20 | 20 | 20 | 20 | 20 | 20 | 20 | 20 |
| | Carbon black | 10 | 10 | 10 | 10 | 10 | 10 | 10 | 10 | 5 | 10 | 10 | 10 |
| | Silica 1 | 90 | 90 | 90 | 90 | 90 | 90 | 90 | 90 | 95 | 90 | 90 | 90 |
| | Organosilicon compound 1 | 7.2 | 7.2 | 7.2 | 7.2 | 7.2 | 7.2 | 7.2 | 7.2 | 7.6 | 7.2 | | |
| | Organosilicon compound 2 | | | | | | | | | | | 7.2 | 7.2 |
| | Solid resin 1 | 30 | 40 | 45 | 50 | 35 | 30 | | | 45 | 45 | 10 | 20 |
| | Solid resin 2 | | | | | | | 45 | | | | | |
| | Solid resin 3 | | | | | | | | 45 | | | | |
| | Oil | 10 | 15 | 10 | 5 | 20 | 25 | 10 | 10 | 10 | 10 | 25 | 25 |
| | Stearic acid | 2 | 2 | 2 | 2 | 2 | 2 | 2 | 2 | 2 | 2 | 2 | 2 |
| | Zinc oxide | 2 | 2 | 2 | 2 | 2 | 2 | 2 | 2 | 2 | 2 | 2 | 2 |
| | Antioxidant | 1 | 1 | 1 | 1 | 1 | 1 | 1 | 1 | 1 | 1 | 1 | 1 |
| | Wax | 1 | 1 | 1 | 1 | 1 | 1 | 1 | 1 | 1 | 1 | 1 | 1 |
| | Sulfur | 1.5 | 1.5 | 1.5 | 1.5 | 1.5 | 1.5 | 1.5 | 1.5 | 1.5 | 1.5 | 1.5 | 1.5 |
| | Vulcanization accelerator NS | 2 | 2 | 2 | 2 | 2 | 2 | 2 | 2 | 2 | 2 | 2 | 2 |
| | Vulcanization accelerator DPG | 2 | 2 | 2 | 2 | 2 | 2 | 2 | 2 | 2 | 2 | 2 | 2 |

(continued)

| | | Example | | | | | | | | | | Comparative Example | |
|---|---|---|---|---|---|---|---|---|---|---|---|---|---|
| | | 1-1 | 1-2 | 1-3 | 1-4 | 1-5 | 1-6 | 1-7 | 1-8 | 1-9 | 1-10 | 1-1 | 1-2 |
| Evaluation | Tg (°C) | -12 | -16 | -14 | -12 | -18 | -16 | -13 | -12 | -16 | -18 | -13 | -23 |
| | Total styrene content (α 1, % by mass) | 22.0 | 20.0 | 20.0 | 20.0 | 20.0 | 20.5 | 20.0 | 20.0 | 20.0 | 32.0 | 22.0 | 26.4 |
| | Total vinyl content (α 2, % by mass) | 47.4 | 15.4 | 15.4 | 15.4 | 15.4 | 23.4 | 15.4 | 15.4 | 15.4 | 9.8 | 47.4 | 28.2 |
| | α 1/α 2 | 0.5 | 1.3 | 1.3 | 1.3 | 1.3 | 0.9 | 1.3 | 1.3 | 1.3 | 3.3 | 0.5 | 0.9 |
| | Amount of resin components/Amount of oils | 3.0 | 2.7 | 4.5 | 10.0 | 1.8 | 1.2 | 4.5 | 4.5 | 4.5 | 4.5 | 0.4 | 0.8 |
| | (a) Fuel economy index | 110 | 115 | 110 | 105 | 115 | 120 | 105 | 105 | 105 | 105 | 95 | 100 |
| | (b) Wet grip performance index (35°C) | 115 | 120 | 130 | 130 | 110 | 105 | 130 | 135 | 135 | 110 | 105 | 100 |
| | Overall performance (= (a) + (b)) | 225 | 235 | 240 | 235 | 225 | 225 | 235 | 240 | 240 | 215 | 200 | 200 |

[Table 2]

| | | Example | | | | | | | | | | Comparative Example | |
|---|---|---|---|---|---|---|---|---|---|---|---|---|---|
| | | 2-1 | 2-2 | 2-3 | 2-4 | 2-5 | 2-6 | 2-7 | 2-8 | 2-9 | 2-10 | 2-1 | 2-2 |
| Amount (parts by mass) | SBR 1 | 80 | | | | | 20 | | | | | 80 | |
| | SBR 2 | | 80 | 80 | 80 | 80 | 60 | 80 | 80 | 80 | | | |
| | SBR 3 | | | | | | | | | | | | 110 (Oil 30) |
| | SBR 4 | | | | | | | | | | 110 (Oil 30) | | |
| | BR | 20 | 20 | 20 | 20 | 20 | 20 | 20 | 20 | 20 | 20 | 20 | 20 |
| | Carbon black | 10 | 10 | 10 | 10 | 10 | 10 | 10 | 10 | 5 | 10 | 10 | 10 |
| | Silica 2 | 90 | 90 | 90 | 90 | 90 | 90 | 90 | 90 | 95 | 90 | 90 | 90 |
| | Organosilicon compound 1 | 7.2 | 7.2 | 7.2 | 7.2 | 7.2 | 72 | 7.2 | 7.2 | 7.6 | 7.2 | | |
| | Organosilicon compound 2 | | | | | | | | | | | 7.2 | 7.2 |
| | Solid resin 1 | 10 | 40 | 45 | 50 | 35 | 30 | | | 45 | 45 | 10 | 20 |
| | Solid resin 2 | | | | | | | 45 | | | | | |
| | Solid resin 3 | | | | | | | | 45 | | | | |
| | Oil | 25 | 15 | 10 | 5 | 20 | 25 | 10 | 10 | 10 | 10 | 25 | 25 |
| | Stearic acid | 2 | 2 | 2 | 2 | 2 | 2 | 2 | 2 | 2 | 2 | 2 | 2 |
| | Zinc oxide | 2 | 2 | 2 | 2 | 2 | 2 | 2 | 2 | 2 | 2 | 2 | 2 |
| | Antioxidant | 1 | 1 | 1 | 1 | 1 | 1 | 1 | 1 | 1 | 1 | 1 | 1 |
| | Wax | 1 | 1 | 1 | 1 | 1 | 1 | 1 | 1 | 1 | 1 | 1 | 1 |
| | Sulfur | 1.5 | 1.5 | 1.5 | 1.5 | 1.5 | 1.5 | 1.5 | 1.5 | 1.5 | 1.5 | 1.5 | 1.5 |
| | Vulcanization accelerator NS | 2 | 2 | 2 | 2 | 2 | 2 | 2 | 2 | 2 | 2 | 2 | 2 |
| | Vulcanization accelerator DPG | 2 | 2 | 2 | 2 | 2 | 2 | 2 | 2 | 2 | 2 | 2 | 2 |

(continued)

| | | Example | | | | | | | | | | Comparative Example | |
|---|---|---|---|---|---|---|---|---|---|---|---|---|---|
| | | 2-1 | 2-2 | 2-3 | 2-4 | 2-5 | 2-6 | 2-7 | 2-8 | 2-9 | 2-10 | 2-1 | 2-2 |
| Evaluation | Tg (°C) | -12 | -18 | -16 | -14 | -16 | -16 | -13 | -12 | -16 | -18 | -13 | -23 |
| | Total styrene content ($\alpha$ 1, % by mass) | 22.0 | 20.0 | 20.0 | 20.0 | 20.0 | 20.5 | 20.0 | 20.0 | 20.0 | 32.0 | 22.0 | 26.4 |
| | Total vinyl content ($\alpha$ 2, % by mass) | 47.4 | 15.4 | 15.4 | 15.4 | 15.4 | 23.4 | 15.4 | 15.4 | 15.4 | 9.8 | 47.4 | 28.2 |
| | $\alpha$ 1/$\alpha$ 2 | 0.5 | 1.3 | 1.3 | 1.3 | 1.3 | 0.9 | 1.3 | 1.3 | 1.3 | 3.3 | 0.5 | 0.9 |
| | Amount of resin components/Amount of oils | 0.4 | 2.7 | 4.5 | 10.0 | 1.8 | 1.2 | 4.5 | 4.5 | 4.5 | 4.5 | 0.4 | 0.8 |
| | (a) Fuel economy index | 105 | 115 | 115 | 110 | 120 | 120 | 105 | 105 | 100 | 100 | 95 | 100 |
| | (b) Wet grip performance index (35°C) | 120 | 120 | 130 | 125 | 115 | 110 | 135 | 140 | 130 | 108 | 105 | 100 |
| | Overall performance (= (a) + (b)) | 225 | 235 | 245 | 235 | 235 | 230 | 240 | 245 | 230 | 208 | 200 | 200 |

The tables show that the overall performance in terms of wet grip performance at high temperatures and fuel economy (expressed by the sum of the two indices: wet grip performance index (35°C) and fuel economy) was excellent in the examples which contained one or more fillers including silica, and one or more silane coupling agents including one or more organosilicon compounds containing an alkoxysilyl group and a sulfur atom with six or more carbon atoms linking the alkoxysilyl group and the sulfur atom, and which had a glass transition temperature of -18°C or higher.

## Claims

1. A tire, comprising a tire component comprising a tire rubber composition, the rubber composition comprising:

   one or more fillers comprising silica; and
   one or more silane coupling agents,
   the silane coupling agents comprising one or more organosilicon compounds containing an alkoxysilyl group and a sulfur atom with six or more carbon atoms linking the alkoxysilyl group and the sulfur atom,
   the rubber composition having a glass transition temperature of -18°C or higher.

2. The tire according to claim 1, wherein the rubber composition has a glass transition temperature of -16°C or higher.

3. The tire according to claim 1 or 2, wherein the rubber composition comprises one or more rubber components having a total styrene content of 30% by mass or lower.

4. The tire according to any one of claims 1 to 3, wherein the rubber composition comprises, based on 100% by mass of rubber components therein, 60 to 95% by mass of one or more styrene-butadiene rubbers and 5 to 40% by mass of one or more polybutadiene rubbers.

5. The tire according to any one of claims 1 to 4, wherein the rubber composition comprises, per 100 parts by mass of one or more rubber components therein, 80 parts by mass or more of the silica.

6. The tire according to any one of claims 1 to 5, wherein the rubber composition comprises a silica having a nitrogen adsorption specific surface area of 160 $m^2/g$ or more.

7. The tire according to any one of claims 1 to 6, wherein an amount of oils is 20 parts by mass or less per 100 parts by mass of one or more rubber components in the rubber composition.

8. The tire according to any one of claims 1 to 7, wherein the rubber composition comprises, per 100 parts by mass of one or more rubber components therein, 30 parts by mass or more of one or more resin components.

9. The tire according to any one of claims 1 to 8, wherein an amount of oils and an amount of resin components each per 100 parts by mass of one or more rubber components in the rubber composition satisfy the following relationship:
   Amount of resin components/Amount of oils ≥ 2.0.

10. The tire according to any one of claims 1 to 9, wherein the tire component is a tread.

Europäisches Patentamt
European Patent Office
Office européen des brevets

# EUROPEAN SEARCH REPORT

Application Number
EP 21 18 3380

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/173379 A1 (MERGELL BORIS [DE] ET AL) 24 July 2008 (2008-07-24)<br>* examples 3(I), 5(I); table 1 *<br>* paragraphs [0008], [0020] - [0021] *<br>----- | 1-10 | INV.<br>B60C1/00<br>C08L9/06<br>C08K5/548<br>C08K3/36<br><br>ADD.<br>C08L9/00<br>C08L91/00<br>B60C1/0016 |
| X | US 2018/030250 A1 (YOKOYAMA YUKA [JP]) 1 February 2018 (2018-02-01)<br>* examples 1-5 *<br>* production example 3 *<br>* paragraph [0006] *<br>----- | 1-10 | |
| A | JP 2020 100847 A (SUMITOMO RUBBER IND) 2 July 2020 (2020-07-02)<br>* examples 1-9 *<br>* paragraphs [0002] - [0004], [0016] - [0019] *<br>----- | 1-10 | |

TECHNICAL FIELDS SEARCHED (IPC)

B60C
C08L
C08K

The present search report has been drawn up for all claims

1

| Place of search | Date of completion of the search | Examiner |
|---|---|---|
| Munich | 8 November 2021 | Baekelmans, Didier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO. EP 21 18 3380

This annex lists the patent family members relating to the patent documents cited in the above-mentioned European search report.
The members are as contained in the European Patent Office EDP file on
The European Patent Office is in no way liable for these particulars which are merely given for the purpose of information.

08-11-2021

| Patent document cited in search report | Publication date | Patent family member(s) | Publication date |
|---|---|---|---|
| US 2008173379 A1 | 24-07-2008 | AT 482995 T | 15-10-2010 |
| | | DE 102005044456 A1 | 22-03-2007 |
| | | EP 1928949 A1 | 11-06-2008 |
| | | JP 2009507966 A | 26-02-2009 |
| | | US 2008173379 A1 | 24-07-2008 |
| | | WO 2007031144 A1 | 22-03-2007 |
| US 2018030250 A1 | 01-02-2018 | CN 107207795 A | 26-09-2017 |
| | | EP 3255089 A1 | 13-12-2017 |
| | | JP 6211025 B2 | 11-10-2017 |
| | | JP 2016151017 A | 22-08-2016 |
| | | US 2018030250 A1 | 01-02-2018 |
| | | WO 2016133029 A1 | 25-08-2016 |
| JP 2020100847 A | 02-07-2020 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2018065954 A
- US 4414370 A
- JP S596207 A
- JP H558005 B
- JP H1313522 A
- US 5010166 A


### Non-patent literature cited in the description


- TREND. Toagosei Co., Ltd, 2000, vol. 3, 42-45